# EUROPEAN PATENT SPECIFICATION

(11) **EP 4 036 446 B1**
(45) Date of publication and mention of the grant of the patent: **03.12.2025**
(21) Application number: 22154841.5
(22) Date of filing: 02.02.2022
(51) Int. Cl.: F16L 3/12, F16L 55/035

(54) **A DAMPING SYSTEM FOR VEHICLE PIPES**
DÄMPFUNGSSYSTEM FÜR FAHRZEUGROHRE
SYSTÈME D'AMORTISSEMENT POUR TUYAUX DE VÉHICULES

(30) Priority: 02.02.2021 IT 202100002234
(43) Date of publication of application: 03.08.2022
(73) Proprietor: IVECO S.P.A., 10156 Torino (IT)
(72) Inventor: BELLOSTA, Claudio, 10072 Mappano (IT)
(74) Representative: Studio Torta S.p.A.

(56) References cited:
- DE-A1- 2 303 634
- US-A- 3 684 223
- US-A1- 2017 030 386
- US-B2- 8 875 743

## Description

### TECHNICAL SECTOR

This invention concerns a vibration damping system, in particular a vibration damping system for vehicle components.

The preferred application of this invention, though not the only one, is in the damping of vibrations in vehicle pipes.

### PRIOR ART

It is known that, in a vehicle, various pipes must be fastened for transporting air or fluids of various kinds such as fuel, cooling fluids, or other operating fluids.

These pipes are fastened via rigid supports to the vehicle or to the frame of the vehicle or to portions integral thereto. In any case, it is clear that, thanks to this fastening, the vehicle vibrations are conveyed to the pipe.

In this way, it is clear that the service life both of the pipe and of the supports is reduced. In addition, it is possible that some vibrations cause the pipe system to resound, causing unexpected breakages.

There is, thus, the need to reduce the vibrations of the vehicle pipes in order to increase the service life of the pipes and of their fastening systems.

Publications US3684223 A, DE2303634 A1, US2017030386 A1 or US8875743 B2 discloses pipe connection means that are however not suitable for being used in vehicular field, in particular, to allow the connection of cables to metallic portion of the vehicle.

The purpose of this invention is to meet the requirements mentioned above.

### SUMMARY OF THE INVENTION

The above-mentioned purpose is achieved with a damping system and a fastening arrangement for the vehicle as claimed in the attached claims.

### BRIEF DESCRIPTION OF THE DRAWINGS

To better understand this invention a preferred embodiment is described below, by way of non-limiting example and with reference to the attached drawings, in which:
- Figure 1 is a perspective view of a pipe equipped with a system according to the invention;
- Figure 2 is a schematic front view, partially in cross-section, of a part of a first embodiment of the damping system according to the invention;
- Figure 3 is a front view, partially in cross-section, of the first embodiment of the damping system according to the invention;
- Figures 4 and 5 are front views, in different operating conditions, of the damping system of the invention;
- Figure 6 is a perspective view of the first embodiment of the damping system according to the invention;
- Figure 7 is a perspective view of a second embodiment of the damping system according to the invention;
- Figure 8 is a perspective view of a third embodiment of the damping system according to the invention;
- Figures 9 and 10 are cross-section views along the lines IX-IX and X-X of the damping system in Figure 3;
- Figures 11 and 12 are cross-section views along the lines XI-XI and XII-XII of the damping system in Figure 3 in two different operating conditions; and
- Figures 13 and 14 are front views, partially in cross-section, of the embodiments in Figures 6 and 7.

### DETAILED DESCRIPTION OF THE INVENTION

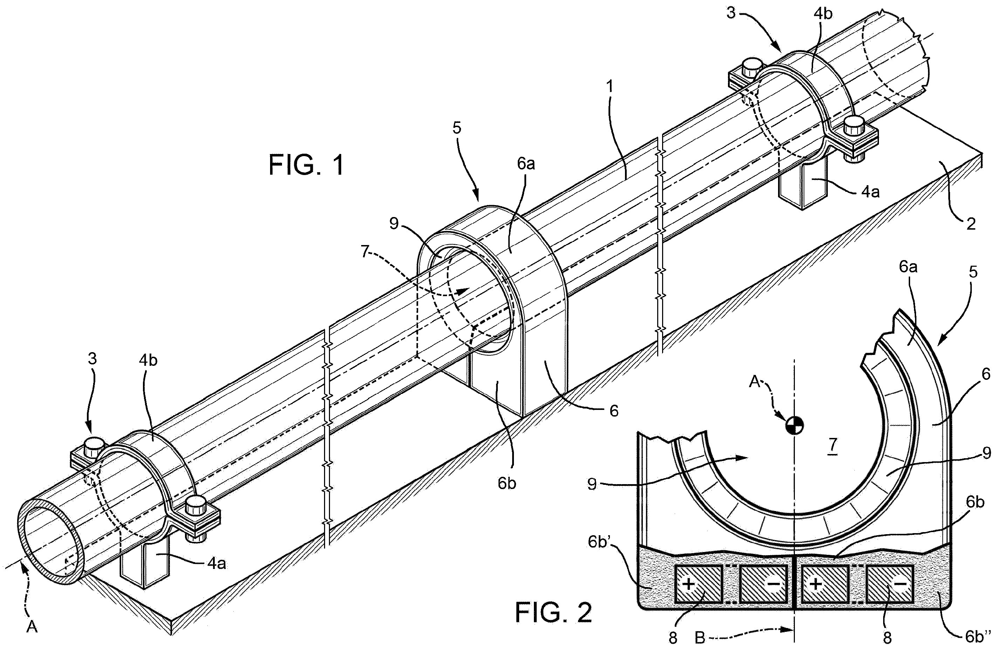

Figure 1 illustrates a pipe 1 that is fastened to a portion 2 of a vehicle component, such as the frame or a part carried by it. In particular, the pipe 1 extends along a longitudinal axis A, which is prismatic in shape and, preferably, cylindrical, and is fixed along this axis A to the portion 2 via a fastening arrangement comprising fastening means 3.

In particular, in the non-limiting embodiment illustrated, the fastening arrangement comprises a pair of fastening means 3 along the axis A of the pipe 1. The fastening means 3 preferably comprise a fastening bracket 4, which can be fastened to the portion 2.

In particular, the fastening bracket comprises a fastening portion 4a that can be fastened to the portion 2 and a coupling portion 4b that can be fastened to the fastening portion 4a. In particular, the coupling portion 4b and the fastening portion 4a can be fastened via threaded elements and comprise, between them, the pipe 1 that is kept in contact between them thanks to the load imparted by the threaded elements.

Advantageously, the fastening portions 4a and coupling portions 4b define, between them, a circular seat for housing the pipe 1 so that an internal surface thereof has a shape that is complementary to the external surface of the pipe 1.

According to the invention, the pipe 1 is also connected to the portion 2 by means of at least one damping system 5.

In particular, the damping system, as can clearly be seen in Figures 2 to 5, comprises a main body 6 defining an opening 7; the main body 6 and the opening 7 have suitable dimensions for enabling the insertion of the pipe 1 inside the opening 7. The opening 7, thus, passes through the body 6 and extends around the axis A of the pipe 1, preferably coaxial to it.

The damping system 5 comprises magnetic elements 8 that are configured to be magnetically coupled with the support 2 so as to fasten the body 6 to the same. In particular, the magnetic elements 8 are magnets that are incorporated inside the body 6.

Advantageously, the main body 6 is made of elastic material, preferably polymer, having damping properties, for example rubber or nylon. Advantageously, the main body 6 has a symmetrical shape in relation to an axis B that is perpendicular to the axis A.

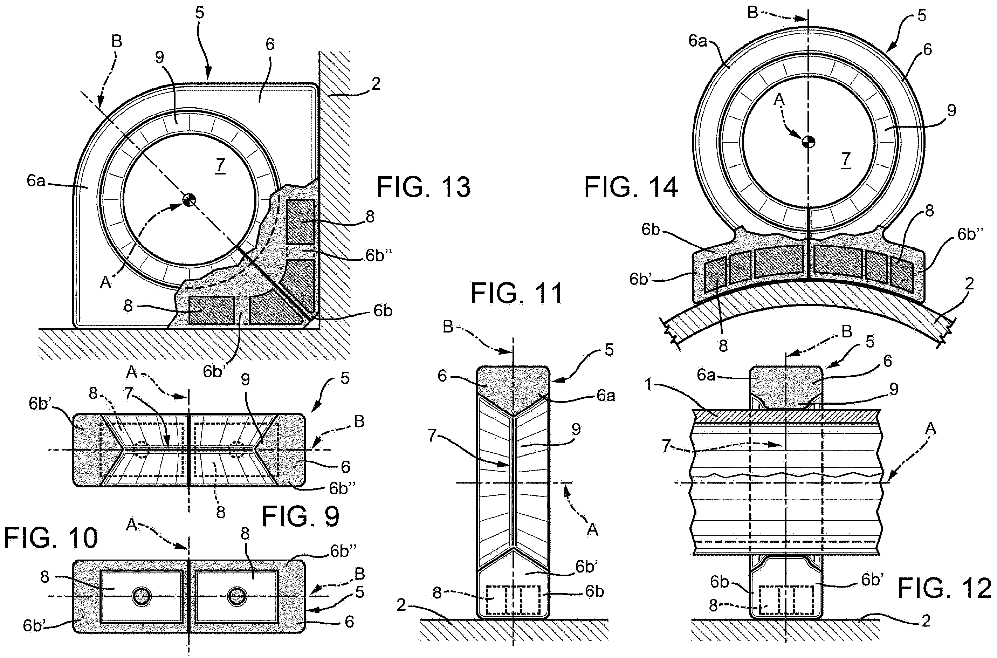

The pipe 1 cooperates in contact with the radial internal surface of the opening 7, via a lip 9 extending radially inside of it. According to what can be seen in Figure 11, this lip 9 advantageously has a convex "V" shape in relation to the axis A.

More preferably, this lip 9 is symmetrical in relation to the transverse axis B. Advantageously, a radial internal diameter of the lip 9 is smaller than the external diameter of the pipe 1 so that, when inserted (Figure 12), the lip 9 tends to be deformed to keep the same in a state of radial compression around the axis A.

More specifically, the main body 6 defines an external portion 6a and a contact portion 6b, where the contact portion 6b defines a surface that, in use, is in contact with the portion 2 while the external portion 6a extends on the opposite side to the contact portion 6b in relation to the portion 2.

More specifically, the magnetic elements 8 are carried by the contact portion 6b in a position near the surface being in contact with the portion 2.

In particular, the contact portion 6b can be opened transversely to the axis B so as to enable the insertion of the pipe 1. Even more specifically, the contact portion 6b defines a first and a second leg 6b', 6b'' facing each other in relation to the axis B and, advantageously, are symmetrical to it.

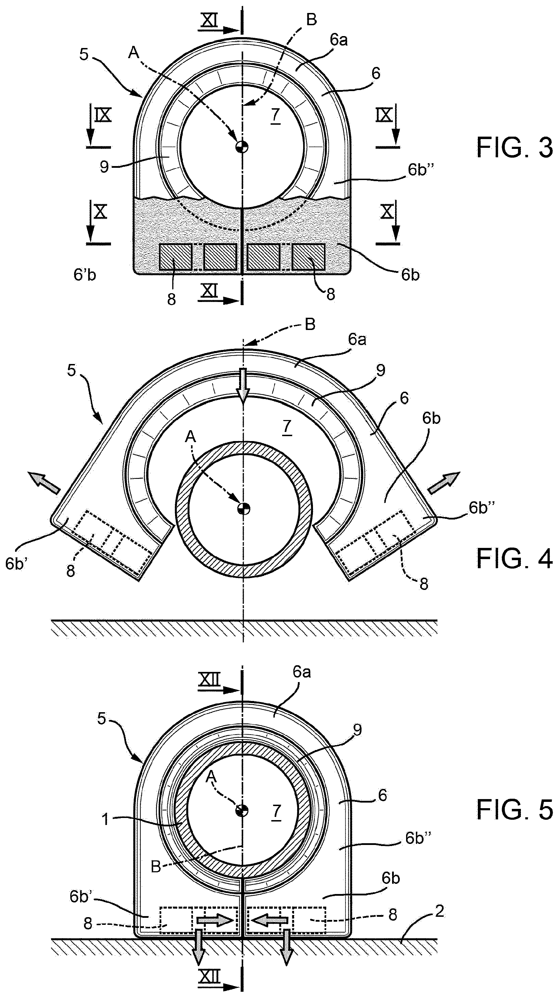

Thanks to the elasticity of the body 6, the legs 6b', 6b" may assume a first operating condition wherein they are spaced apart to enable the insertion of the pipe 1 (Figure 4) or a second operating condition (Figure 5) wherein they are in contact with each other and, thus, do not allow the pipe 1 to come out.

Advantageously, the magnetic means 8 are carried by each of the legs 6b', 6b" so as to keep them in contact with the support 2 thanks to the electromagnetic action exerted by the magnetic means 8.

Advantageously, the magnetic means 8 are placed with opposite polarities to the axis B so as to keep the legs 6b', 6b'' in contact, where present in the second operating condition. The magnetic means 8 preferably comprise a single magnet per leg 6b', 6b'', or, depending on the size of the legs 6b' , 6b'' and of the body 6, several magnets per leg 6b' , 6b".

As can be seen in the various embodiments, the external portion 6a defines a shape surrounding, at least partially and preferably totally, the pipe 1 and having a shape relating to its external surface, in this case, cylindrical.

In contrast, the contact portion 6b has a shape that can vary in order to couple with the shape of the portion 2. In particular, in the form in Figures 3, 4, 5, and 7, the contact portion 6b is basically flat since it cooperates with a flat surface 2; in this case, the axis B is perpendicular to the surface of the surface 2.

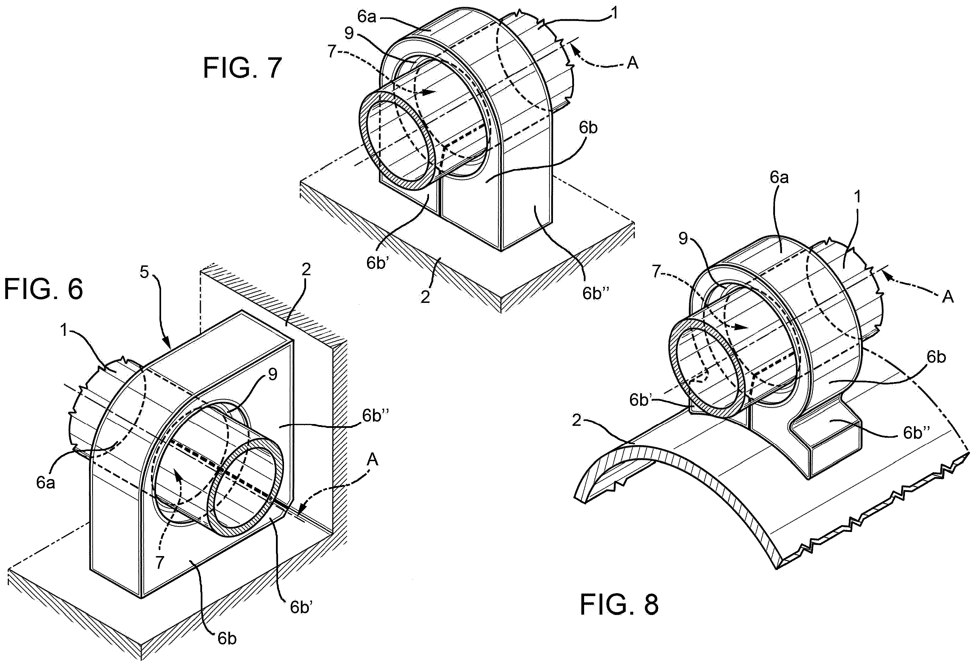

In the form in Figures 6 and 13, the contact portion has a polygonal contact shape, in the example described triangular, since it cooperates with a portion 2 shaped like a shoulder. Consequently, the axis B coincides with the bisector of the angle delimited by the walls defining the shoulder. In the example illustrated, the axis B is at 45° since the contact portion 6b is shaped like an isosceles triangle, the walls defining the shoulder being placed at 90° to each other.

In the forms in Figures 8 and 14, the contact portion has a curved contact shape since cooperating with a curved portion 2, in this particular case, concave in relation to the axis A. Consequently, the axis B coincides with a radius defining the curvature of the curved shape portion 2.

The operation of the embodiments of the damping system 5 according to the invention described above is the following.

As illustrated in Figure 4, the body 6 may be open to fit around the pipe 1 and, once fitted as in Figure 5, it is held in contact with the portion 2 via the magnetic means 8.

The magnetic means 8 also keep the legs 8b', 8b'' in contact and the lip 9 radially compressed to the external surface of the pipe.

If vibrations are conveyed from the portion 2 and/or the fastening means 3, the damping system 5 dampens the latter, thanks to the composition of the body 6, so as to reduce the stresses acting on the pipe 1.

From the above, the advantages of a damping system 5 according to the invention are clear.

Thanks to the damping system 5, it is possible to provide a fastening arrangement that makes it possible to dampen vibrations between the pipe 1 and the portion 2 increasing the service life thereof.

In particular, the damping system 5 may be easily assembled and disassembled in different positions along the pipe and in different numbers, according to need.

Again, the damping system 5 proposed is particularly inexpensive and compact.

Finally, it is clear that changes may be made to the damping system 5, and variations produced thereto, according to this invention that, in any case, do not depart from the scope of protection defined by the claims.

As mentioned, the shape of the body 6, specifically of the external portion 6a and of the contact portion 6b, may vary depending on the size and shape of the pipe 1 and of the support 2.

Again, the legs 6b', 6b'' may not be included or the shape may be different, just like the magnetic means 8 that may vary in shape and number. Similarly, the lip 9 may also not be included or vary in its shape.

## Claims

1. A damping system (5) configured to fix a pipe (1) in a vehicle to a portion (2) of the latter, said damping system (5) comprising a body (6) made of elastic material defining a contact portion (6b) configured to cooperate in contact with said portion (2) and an external portion (6a) extending on the opposite side of said contact portion (6b) and configured to wrap, at least partially, an external surface of said pipe (1), said body (6a) defining an opening (7) adapted to house said pipe (1), said opening (7) extending passing through said body (6) around a longitudinal axis (A) of said pipe (1), wherein said body (6) defines a lip (9) extending radially inside said opening (7), said lip (9) deforming when said pipe (1) is inserted in said opening (7), **characterized in that** said damping system (5) comprising magnetic means (8) configured to allow the contact coupling of said body (6) to said portion (2).

2. The system according to claim 1, in which said magnetic means (8) are incorporated within said body (6).

3. The system according to Claim 1 or 2, in which said magnetic means (8) are carried by said contact portion (6b).

4. The system according to one of the previous claims, in which said contact portion (6b) can be opened in order to allow the insertion of said pipe (1) in said opening (7).

5. The system according to Claim 4, wherein said contact portion (6b) defines a first and a second leg (6b', 6b") configured to assume a first operating condition in which they are spaced apart to allow insertion of said pipe (1) into said opening (7) or a second operating condition in which they are in contact with each other and therefore do not allow said pipe (1) to come out of said opening (7).

6. The system according to Claim 5 in combination with Claim 4, in which said magnetic means (8) are carried by each of said legs (6b', 6b") and the respective poles are turned opposite each other. otherwise so that said magnetic means (8) keep said legs (6b, 6b") in contact in said second operating condition.

7. The system according to one of the preceding claims, in which said contact portion (6b) has a flat shape.

8. The system according to one of the preceding claims, in which said contact portion (6b) has a polygonal shape.

9. The system according to one of the preceding claims, in which said contact portion (6b) has a curved shape.

10. The system according to Claim 9, wherein said lip (9) has a symmetrical shape with respect to an axis (B) perpendicular to said axis (A).

11. A fixing arrangement of a pipe (1) to fix the latter to a portion (2) of a vehicle, said pipe (1) extending along a longitudinal axis (A), said arrangement comprising a pair of fixing elements (3) configured to fix along said axis (A) said pipe (1) to said portion (2), said arrangement comprising at least one damping system (5) according to one of the preceding claims interposed between said fastening means (3) along said axis (TO).

12. A vehicle comprising an arrangement according to claim 11.

## Patentansprüche

1. Dämpfungssystem (5), das konfiguriert ist, um ein Rohr (1) in einem Fahrzeug an einem Abschnitt (2) des letzteren zu befestigen, wobei das Dämpfungssystem (5) einen Körper (6) aus elastischem Material umfasst, der einen Kontaktabschnitt (6b) definiert, der konfiguriert ist, um in Kontakt mit dem Abschnitt (2) zusammenzuwirken, und einen äußeren Abschnitt (6a), der sich auf der gegenüberliegenden Seite des Kontaktabschnitts (6b) erstreckt und konfiguriert ist, um mindestens teilweise eine Außenfläche des Rohrs (1) zu umhüllen, wobei der Körper (6a) eine Öffnung (7) definiert, die angepasst ist, um das Rohr (1) aufzunehmen, wobei sich die Öffnung (7) durch den Körper (6) um eine Längsachse (A) des Rohrs (1) erstreckt, wobei der Körper (6) eine Lippe (9) definiert, die sich radial innerhalb der Öffnung (7) erstreckt, wobei sich die Lippe (9) verformt, wenn das Rohr (1) in die Öffnung (7) eingeführt wird, **dadurch gekennzeichnet, dass** das Dämpfungssystem (5) magnetische Mittel (8) umfasst, die konfiguriert sind, um die Kontaktkopplung des Körpers (6) mit dem Abschnitt (2) zu ermöglichen.

2. System nach Anspruch 1, wobei die magnetischen Mittel (8) in den Körper (6) integriert sind.

3. System nach Anspruch 1 oder 2, wobei die magnetischen Mittel (8) von dem Kontaktabschnitt (6b) getragen werden.

4. System nach einem der vorhergehenden Ansprüche, wobei der Kontaktabschnitt (6b) geöffnet werden kann, um das Einführen des Rohrs (1) in die Öffnung (7) zu ermöglichen.

5. System nach Anspruch 4, wobei der Kontaktabschnitt (6b) einen ersten und einen zweiten Schenkel (6b', 6b") definiert, die konfiguriert sind, um einen ersten Betriebszustand anzunehmen, in dem sie voneinander beabstandet sind, um das Einführen des Rohrs (1) in die Öffnung (7) zu ermöglichen, oder einen zweiten Betriebszustand, in dem sie in Kontakt miteinander stehen und daher nicht ermöglichen, dass das Rohr (1) die Öffnung (7) verlässt.

6. System nach Anspruch 5 in Kombination mit Anspruch 4, wobei die magnetischen Mittel (8) von jedem der Schenkel (6b', 6b") getragen werden und die jeweiligen Pole einander gegenüberliegend gedreht sind, ansonsten so, dass die magnetischen Mittel (8) die Schenkel (6b', 6b") in dem zweiten Betriebszustand in Kontakt halten.

7. System nach einem der vorhergehenden Ansprüche, wobei der Kontaktabschnitt (6b) eine flache Form aufweist.

8. System nach einem der vorhergehenden Ansprüche, wobei der Kontaktabschnitt (6b) eine polygonale Form aufweist.

9. System nach einem der vorhergehenden Ansprüche, wobei der Kontaktabschnitt (6b) eine gekrümmte Form aufweist.

10. System nach Anspruch 9, wobei die Lippe (9) eine symmetrische Form in Bezug auf eine Achse (B) senkrecht zu der Achse (A) aufweist.

11. Befestigungsanordnung eines Rohrs (1), um das letztere an einem Abschnitt (2) eines Fahrzeugs zu befestigen, wobei sich das Rohr (1) entlang einer Längsachse (A) erstreckt, wobei die Anordnung ein Paar von Befestigungselementen (3) umfasst, die konfiguriert sind, um das Rohr (1) entlang der Achse (A) an dem Abschnitt (2) zu befestigen, wobei die Anordnung mindestens ein Dämpfungssystem (5) nach einem der vorhergehenden Ansprüche umfasst, das zwischen den Befestigungsmitteln (3) entlang der Achse (TO) angeordnet ist.

12. Fahrzeug, umfassend eine Anordnung nach Anspruch 11.

## Revendications

1. Système d'amortissement (5) configuré pour fixer un tuyau (1) dans un véhicule à une partie (2) de ce dernier, ledit système d'amortissement (5) comprenant un corps (6) en matériau élastique définissant une partie de contact (6b) configurée pour coopérer au contact de ladite partie (2) et une partie externe (6a) s'étendant sur le côté opposé de ladite partie de contact (6b) et configurée pour envelopper, au moins partiellement, une surface externe dudit tuyau (1), ledit corps (6a) définissant une ouverture (7) adaptée pour loger ledit tuyau (1), ladite ouverture (7) s'étendant en passant à travers ledit corps (6) autour d'un axe longitudinal (A) dudit tuyau (1), dans lequel ledit corps (6) définit une lèvre (9) s'étendant radialement à l'intérieur de ladite ouverture (7), ladite lèvre (9) se déformant lorsque ledit tuyau (1) est inséré dans ladite ouverture (7), **caractérisé en ce que** ledit système d'amortissement (5) comprend des moyens magnétiques (8) configurés pour permettre le couplage de contact dudit corps (6) à ladite partie (2).

2. Système selon la revendication 1, dans lequel lesdits moyens magnétiques (8) sont incorporés au sein dudit corps (6).

3. Système selon la revendication 1 ou 2, dans lequel lesdits moyens magnétiques (8) sont portés par ladite partie de contact (6b).

4. Système selon l'une quelconque des revendications précédentes, dans lequel ladite partie de contact (6b) peut être ouverte afin de permettre l'insertion dudit tuyau (1) dans ladite ouverture (7).

5. Système selon la revendication 4, dans lequel ladite partie de contact (6b) définit un premier et un deuxième pied (6b', 6b") configurés pour prendre un premier état de fonctionnement dans lequel ils sont espacés pour permettre l'insertion dudit tuyau (1) dans ladite ouverture (7) ou un deuxième état de fonctionnement dans lequel ils sont en contact l'un avec l'autre et ne permettent donc pas audit tuyau (1) de sortir de ladite ouverture (7).

6. Système selon la revendication 5 en combinaison avec la revendication 4, dans lequel lesdits moyens magnétiques (8) sont portés par chacun desdits pieds (6b', 6b") et les pôles respectifs sont tournés l'un en face de l'autre, sinon de sorte que lesdits moyens magnétiques (8) maintiennent lesdits pieds (6b, 6b'') en contact dans ledit deuxième état de fonctionnement.

7. Système selon l'une quelconque des revendications précédentes, dans lequel ladite partie de contact (6b) présente une forme plate.

8. Système selon l'une quelconque des revendications précédentes, dans lequel ladite partie de contact (6b) présente une forme polygonale.

9. Système selon l'une quelconque des revendications précédentes, dans lequel ladite partie de contact (6b) présente une forme courbée.

10. Système selon la revendication 9, dans lequel ladite lèvre (9) présente une forme symétrique par rapport à un axe (B) perpendiculaire audit axe (A).

11. Agencement de fixation d'un tuyau (1) pour fixer ce dernier à une partie (2) d'un véhicule, ledit tuyau (1) s'étendant le long d'un axe longitudinal (A), ledit agencement comprenant une paire d'éléments de fixation (3) configurés pour fixer le long dudit axe (A) ledit tuyau (1) à ladite partie (2), ledit agencement comprenant au moins un système d'amortissement (5) selon l'une quelconque des revendications précédentes interposé entre lesdits moyens d'attache (3) le long dudit axe (TO).

12. Véhicule comprenant un agencement selon la revendication 11.
